## (19) Europäisches Patentamt
European Patent Office
Office européen des brevets

(11) **EP 1 698 927 A1**

(12) **EUROPÄISCHE PATENTANMELDUNG**

(43) Veröffentlichungstag:
**06.09.2006 Patentblatt 2006/36**

(51) Int Cl.:
***G02B 21/00*** *(2006.01)*

(21) Anmeldenummer: **06003658.9**

(22) Anmeldetag: **23.02.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **01.03.2005 DE 102005009188**

(71) Anmelder: **Carl-Zeiss Jena GmbH 07745 Jena (DE)**

(72) Erfinder:
- **Wolleschensky, Ralf 99510 Apolda (DE)**
- **Kempe, Michael 07751 Jena (DE)**
- **Gross, Herbert 73457 Essingen (DE)**

(54) **Punktscannendes Laser-Scanning-Mikroskop sowie Verfahren zur Einstellung eines Mikroskops**

(57) Punktscannendes Laser- Scanning-Mikroskop mit einem in oder in der Nähe einer Pupillenebene des Strahlenganges zwischen Probe (PR) und Detektion (DE) angeordneten Element (HFT) zur Trennung von Beleuchtungs- und Detektionslicht, das einen reflektierenden oder transmittierenden ersten Bereich (1) zur Übertragung des Beleuchtungslichtes und im wesentlichen außerhalb des ersten Bereiches einen transmittierenden oder reflektierenden zweiten Bereich (2) zur Übertragung des Probenlichtes aufweist, wobei vorteilhaft Ansteuermittel zur Variation der Größe und/ oder Form des ersten und/ oder zweiten Bereiches vorgesehen sind sowie Verfahren zur Einstellung eines Mikroskopes mit einem in oder in der Nähe einer Pupillenebene des Strahlenganges zwischen Probe und Detektion angeordneten Element zur Trennung von Beleuchtungs- und Detektionslicht, das einen reflektierenden oder transmittierenden ersten Bereich zur Übertragung des Beleuchtungslichtes und außerhalb des ersten Bereiches einen transmittierenden oder reflektierenden zweiten Bereich zur Übertragung des Probenlichtes aufweist, wobei Ansteuermittel zur Variation der Größe und/ oder Form des ersten und/ oder zweiten Bereiches vorgesehen sind und die Ansteuerung über einen Regelkreis erfolgt.

EP 1 698 927 A1

**Beschreibung**

**Gegenstand**

Die Erfindung bezieht sich auf Verfahren und Anordnungen in der Mikroskopie, insbesondere der Fluoreszenzmikroskopie, der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throughput Sceening) sowie Verfahren der Durchflusszytometrie. Simultan-Untersuchungen von Proben mit Mehrfachfluorophoren in Echtzeit durch eine simultane Beleuchtung der Probe mit mehreren Beleuchtungswellenlängen werden damit bei überlappenden Fluoreszenzspektren auch in räumlichen Strukturen von dicken Proben möglich.
Es wird ein achromatischer Hauptfarbteiler für die Laser Scanning Mikroskopie realisiert, der eine effiziente Anregung und Detektion in konfokaler Bildgebung mit/ohne erweiterter Schärfentiefe erlaubt und die Integration desselben in ein Laser Scanning Mikroskop beschrieben.
Multipunktbeleuchtungen sind ausdrücklich mit eingeschlossen.

**Stand der Technik**

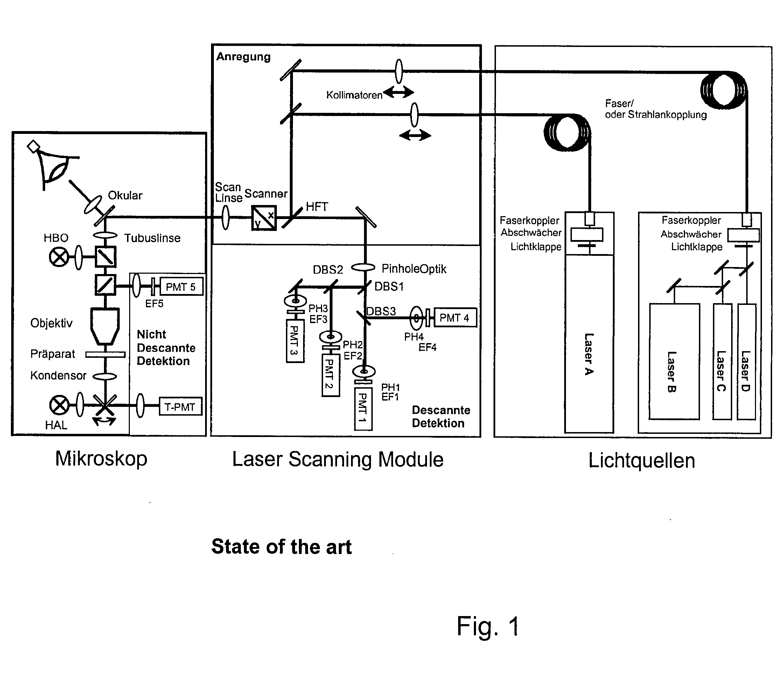

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner verschiedenen gefärbter Zellteile möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitische Strahlteiler verwendet.
Der Stand der Technik soll im folgenden beispielhaft anhand eines konfokalen Laser-Scanning-Mikroskops (LSM) erläutert werden (Abb. 1).
Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (z.B. Gaslaser: Argon, Argon Krypton, Festkörperlaser: TiSa-Laser, Dioden). Weiterhin erfolgt im Lichtquellenmodul die Selektion der Wellenlängen und die Einstellung der Intensität der benötigten Anregungswellenlänge, z.B. durch den Einsatz eines akustooptischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detektion) des Fluoreszenzlichtes, gelangt das Licht, das aus der Fokusebene (Specimen) und aus den darüber und darunter liegenden Ebenen emittiert wird, über die Scanner auf einen dichroitischen Strahlteiler (HFT). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion). In einer weiteren Anordnung zur Detektion einer durch Mehrphotonenabsorption angeregten Farbstofffluoreszenz erfolgt weiterhin eine descanned Detektion, jedoch wird diesmal die Pupille des Objektives in die Detektionseinheit abgebildet (nichtkonfokal descanned Detektion).
Von einem dreidimensional ausgeleuchteten Bild wird durch die konfokale Detektionsanordnung nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden.

Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT 1-4).

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern (HFT siehe Abb. 1)..

Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt.

Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

In einem Laser Scanning Mikroskop (LSM) nach dem Stand der Technik wird die gesamte kreisförmige Pupille ausgeleuchtet, weswegen der Hauptfarbteiler (HFT), als dichroitischer Teiler ausgelegt wird. Dies bedeutet, dass für verschiedene Anregungs- und Detektionswellenlängen verschiedene HFT's benötigt werden, die normalerweise auf einem Filterrad in den Strahlengang ein- und ausgeschwenkt werden können.

Eine lange bekannte Möglichkeit, die Abbildungseigenschaften eines Mikroskops zu modifizieren ist die Verwendung spezieller Pupillenbeleuchtungen. Eine Möglichkeit ist eine ringförmige Pupillenbeleuchtung, die insbesondere zu einer erweiterten Schärfentiefe führt [1]. In Kombination mit radialer Polarisation ergibt sich dabei auch eine erhöhte Auflösung [2]. Andere Beleuchtungen mit dem Ziel einer erhöhten Auflösung wurden in [3] vorgeschlagen. In der konfokalen Mikroskopie wird im allgemeinen mit demselben Objektiv beleuchtet und detektiert. Wegen der starken Verluste insbesondere bei der Detektion mit einer stark beschränkten (z.B. ringförmigen) Pupille verbietet sich zumindest für die Fluoreszenzmikroskopie die Benutzung einer solchen Objektivapertur. Darüber hinaus haben einige der in [3] beschriebenen Aperturen verschiedene Einschränkungen, wie z.B. extrem geringe Anregungseffizienz und eine asymmetrische Point Spread Function (PSF), die sie in der Konfokalmikroskopie nicht allgemein verwendbar machen.

EP1353209A2 beschreibt eine Aperturteilung bei der die wirksame NA der Anregung sehr klein ist. Damit ist die Auflösung des Anregungsstrahlenganges wesentlich schlechter als die Auflösung des Detektionsstrahlengangs. Generell dient die Anordnung zur Unterdrückung von Falschlicht (Abstract und Claim1), wobei die Probe über einen zentralen Teil der Pupille mit verkleinerter NA (Claim2) beleuchtet wird. Das gleiche gilt für die Anordnung, die in DE 29913707U1 beschrieben ist.

In DE19842153C2 hat der anregende Laserstrahl einen wesentlich geringeren Querschnitt als der aus dem Objektiv austretende Fluoreszenzstrahl hat (insb. Abstract und Anspruch 1).

DE10257237A1 beschreibt eine Anordnung mit einem strukturierten Strahlteiler für einen Linienscanner und ein Weitfeldmikroskop. In beiden Fällen erfolgt eine nichtpunktförmige Anregung der Probe.

Eine mögliche Ausführungsform für parallel arbeitende Multipunktscanner stellt beispielsweise der bekannte Einsatz einer Nipkowscheibe dar, wie sie in der erwähnten US 6.028.306 oder der WO 8807695 oder auch in der EP 0 539 691 A1 offenbart ist. Die genannte US-Patentschrift schildert darüber hinaus ein parallel scannendes Laserscanningmikroskop mit einer Multi-Lochblendenplatte, der ein entsprechendes Mikrolinsenarray vorgeschaltet ist, so dass im Endeffekt eine Multipunktquelle erzeugt ist. Weitere Ausführungsformen betreffen die Fluoreszenz-Korrelations-Spektroskopie (FCS), wie sie beispielsweise in WO 01/63259 beschrieben ist.

Durch die Erfindung wird eine achromatische Trennung von Anregungs- und Detektionsstrahlengang in einem Einzel- oder Multipunkt scannenden LSM, d.h. bei einer punktförmigen Anregung und Detektion ermöglicht. Hierbei bleibt die Auflösung des Anregungsstrahlengangs nahezu oder identisch der Auflösung im Detektionsstrahlengang, wobei sich überraschend herausstellte, dass durch die Erzeugung spezieller räumlich kohärenter Beleuchtungsmuster eine nahezu identische optische Auflösung des Mikroskops wie in einem klassischen LSM mit ausgefüllter Pupille erreicht werden kann.

Eine weiterer Vorteil der Erfindung ist es, spezielle Betriebsarten zu ermöglichen, in denen die Tiefenschärfe des Mikroskops gegenüber einem klassischen Einzel- oder Multipunkt scannenden Mikroskops erhöht ist.
Eine weiterer Vorteil der Erfindung ist, eine automatische Regelung des Beleuchtungsmusters in der Pupille in Abhängigkeit von der Betriebsart (z.B. kleines Fokusvolumen, gestrecktes Fokusvolumen) zu realisieren.

Dies wird dadurch erreicht, dass das Anregungslicht in räumlich kohärente Beleuchtungsmuster am Ort einer Pupille des Mikroskops geformt werden. In dieser Pupille ist ein Element angeordnet, das das Beleuchtungsmuster in Richtung Probe reflektiert. Die verbleibenden Bereiche des Elements sind vorzugsweise transparent, so dass das Detektionslicht, welches den restlichen Bereich der Pupille ausfüllt in Richtung Detektion gelangen kann. Eine mögliche Umkehrung betrifft einen transparenten Bereich zur Übertragung des Beleuchtungslichtes zur Probe und einen verbleibenden reflektierenden Bereich zur Übertragung des Detektionslichtes in Richtung Detektionseinheit. Das Element zu Strahltrennung kann starr oder flexibel, in seiner Struktur einstellbar oder auswechselbar, ausgelegt werden.

**Beschreibung der Erfindung**

Durch die vorliegenden Erfindung wird ein achromatischer Strahlteiler für ein Laser Scanning Mikroskop realisiert. Dabei verändert der Teiler die Abbildungseigenschaften im Vergleich zum Stand der Technik nicht oder nur unwesentlich. Zu diesem Zweck wird der Hauptfarbteiler in der Pupillenebene (oder deren Nähe) so ausgelegt, dass er nur in einer bestimmten Region breitbandig reflektierend ausgelegt ist.

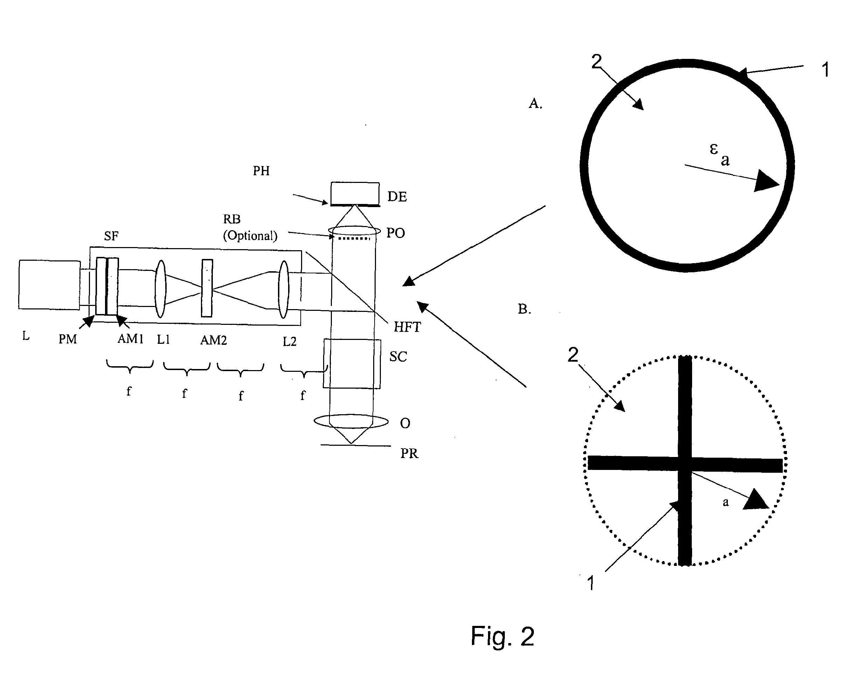

Zwei erste vorteilhafte Auslegungen des HFT und seine Anordnung im Strahlengang zeigt Abb. 2. Dabei wird von einem konfokalen LSM mit variabler konfokaler Blende (entsprechend Abb. 1) ausgegangen. Im Gegensatz zu den Anordnungen nach dem Stand der Technik wird der HFT in einer oder in der Nähe einer Mikroskoppupille angeordnet. Licht der Lichtquelle (L) gelangt über die Mittel der Strahlformung (SF) auf den Strahlteiler HFT und wird von diesem in Richtung Probe reflektiert. Die Oberfläche des HFT ist im schwarzen Bereich (1) verspiegelt, so dass die Anregung in Richtung Probe PR reflektiert wird. Im restlichen Bereich (2) ist der Teiler transparent.

Durch die Anregungsstrahlformung SF, die beispielsweise durch eine Kombination aus Phasen- (PM) und Amplitudenmasken (AM1 und AM2) und klassischer Optik (L1, L2) aus dem Stand der Technik realisiert wird, (beispielsweise durch diffraktive oder holographische Elemente (Lit.: "Diffractive optics improve product design", Photonics Spectra, Laurin Publishing Co., Inc. September 1995)) wird das Strahlprofil der Lichtquelle so beeinflusst, dass es am Teiler HFT weitgehend die Form der Struktur (Bereich 1) auf dem Teiler annimmt. Mit AM1 kann die Amplitude des Strahlprofils in de Pupille beeinflusst werden. Mit Hilfe von AM2 kann eine zusätzliche Raumfilterung zur Unterdrückung von beispielsweise störenden Beugungsordnungen vorgenommen werden, die durch PM oder AM1 erzeugt werden. AM2 nimmt hierzu vorzugsweise die Form des Beleuchtungsmusters am Ort der Probe an. AM1 ist hierzu in oder in der Nähe einer Pupille und AM 2 in einem Zwischenbild angeordnet. Hierdurch wird eine hohe Effizienz im Anregungsstrahlengang sichergestellt. In der in Abb. 2 dargestellten beispielhaften Variante betragen die Abstände zwischen den Elementen PM / L1 / AM / L2 und HFT genau f, wobei f die Brennweite der Linsen L1 und L2 ist (Brennweiten der Linsen müssen nicht gleich gewählt werden). Diffraktiv-optische Elemente (DoE) zur Erzeugung von speziellen Mustern sind Stand der Technik und erhältlich [5].

Das in der Probe erzeugte Fluoreszenzlicht gelangt durch den Bereich 2 des HFT hindurch auf den Detektor. Verloren geht der Anteil des Fluoreszenzlichtes welches auf den Bereich (1) fällt. Der Detektor ist vorzugsweise als konfokaler Detektor nach dem Stand der Technik ausgelegt. Weiterhin sind vor dem Detektor und nach dem HFT Mittel zur Unterdrückung des Anregungslichtes angeordnet (z.B. Emissionsfilter). Zusätzlich kann die Detektion in mehreren Kanälen simultan erfolgen. Dies wird durch die Anordnung von Nebenfarbteilern und weiteren Detektoren entsprechend Abb. 1 bewerkstelligt.

**Fall A. (Fig.2):** Eine kreisförmige Abschattung von $\varepsilon$ der vollen Objektivpupille (innerer Ringdurchmesser $\varepsilon\_a$ mit dem vollen Radius der Pupille a ($\varepsilon$ in Vielfachen von a) führt zu einer Erweiterung der anregungsseitigen Schärfentiefe um das $1/(1-\varepsilon^2)$-fache, einer leicht verringerten lateralen Halbwertsbreite und zu deutlich ausgeprägten Nebenmaxima. Die axiale Verbreiterung und die Höhe der Nebenmaxima kann man dramatisch reduzieren, wenn man mit einer Ringpupille anregt aber mit einer vollen Apertur vorzugsweise konfokal detektiert.

In der erfindungsgemäßen Anordnung nach Abb. 2 ergibt sich eine unerwünschte Nebenwirkung aus der Verkleinerung der detektionsseitig wirksamen Apertur durch den HFT. Diese hat erstens eine verringerte Detektionseffizienz zur Folge. Bei einer 5%igen Abschattung der Pupille ergibt sich z.B., dass 95% der Fluoreszenz den HFT passieren. Dies kann man durch eine weitere Verringerung der Ringbreite noch verbessern (96% Detektionseffizienz bei $\varepsilon$ = 0.02). Um auch die Anregung effizient zu gestalten, kann eine ringförmige Strahlformung beispielsweise mit einem Axicon oder mit einem diffraktiven Element vor dem HFT vorgesehen werden. Zweitens bewirkt diese Verkleinerung der Apertur eine Modifikation der detektionsseitigen Abbildung. Dieser Effekt ist aber bei beleuchtungsseitigen Abschattungen von $\varepsilon$ > 0.9 zu vernachlässigen bzw. wird (in diesem Bereich) durch die Verschmälerung der lateralen Ausdehnung der PSF durch die Ringbeleuchtung kompensiert.

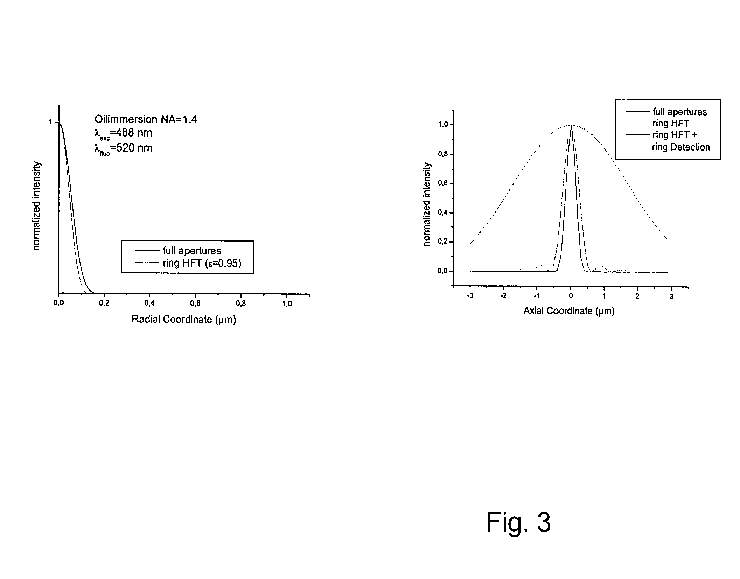

Eine konfokale PSF in einer Anordnung nach Abb.2 mit $\varepsilon$ = 0.95 ist in Abb. 3 im Vergleich zu einer PSF bei voller Pupille gezeigt. Zugleich sieht man aus dem axialen Verlauf der PSF, dass die Detektion über einer kreisförmigen Apertur den Effekt der erweiterten Schärfetiefe fast aufhebt. Das bedeutet, dass die Verwendung des erfindungsgemäßen HFT keine signifikanten negativen Veränderungen der Abbildungseigenschaften zur Folge hat. Unter Verwendung des erfindungsgemäßen HFT sind aber zugleich gezielte Modifikationen der PSF möglich.

1. Wenn die erweiterte Schärfentiefe erwünscht ist und detektionsseitige Verluste keine Rolle spielen, kann eine zusätzliche Ringblende RB (etwa gleicher Größe wie bei HFT) vor die Pinholeoptik platziert werden (siehe Abb. 2).
2. Eine verbesserte laterale Auflösung erreicht man durch die Verwendung von Laserstrahlung mit radialer Polarisation [2]. Eine entsprechende Optik kann im Strahlformungsteil in Abb.2 mit vorgesehen werden und kann z.B. auf einem LCD basieren [4].

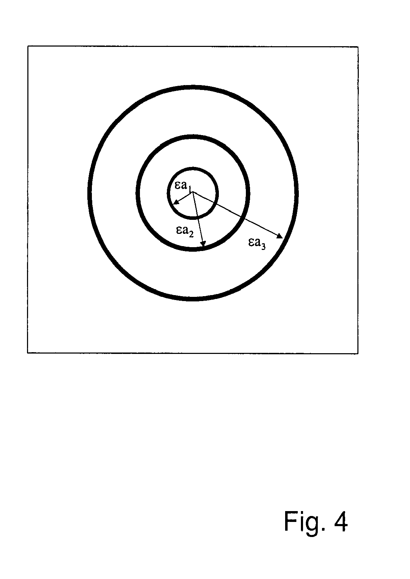

Um der Tatsache, dass verschiedene Objektive verschiedene Pupillenradien a aufweisen Rechnung zu tragen, könnten verschiedene Hauptfarbteiler auf ein Filterrad gesetzt und je nach Objektiv eingeschwenkt werden. Zusätzlich könnten auf dem Filterrad auch dichroitische HFT angebracht werden, um den Betrieb des LSM nach dem Stand der Technik zu ermöglichen. Die Verwendung verschiedener Ringaperturen erübrigt sich natürlich dann, wenn zwischen HFT und Objektiv eine Zoomoptik zur Anpassung des Strahls an verschiedenen Objektive vorgesehen ist.
Eine alternative Lösung ergibt sich aus folgenden Überlegungen. Für eine begrenzte Anzahl von Objektiven mit verschiedener Apertur könnte man einen gemeinsamen HFT generieren, wie in Abb. 4 am Bsp. dreier Pupillenradien gezeigt ist. Dies setzt allerdings eine Strahlformung vor dem HFT voraus, die wiederum mittels einem diffraktiven Element (siehe SF in Abb. 2) erfolgen kann. Wenn nur jeweils ein dünner Ring verwendet wird, ergeben sich selbst in diesem Fall noch akzeptable Verluste für die Fluoreszenzdetektion. Für insgesamt drei verschiedenen Pupillenradien, wobei zwei um einen Faktor $s_1$ bzw. $s_2$ kleiner sind als der maximale Radius ($s_1=a_1/a$, $s_2=a_2/a$ in Abb. 4) ergibt sich als Verlust bei Beleuchtung des maximalen Radius $V = (1 - \varepsilon^2)\cdot \left(1 + s_1^2 + s_2^2\right)$.

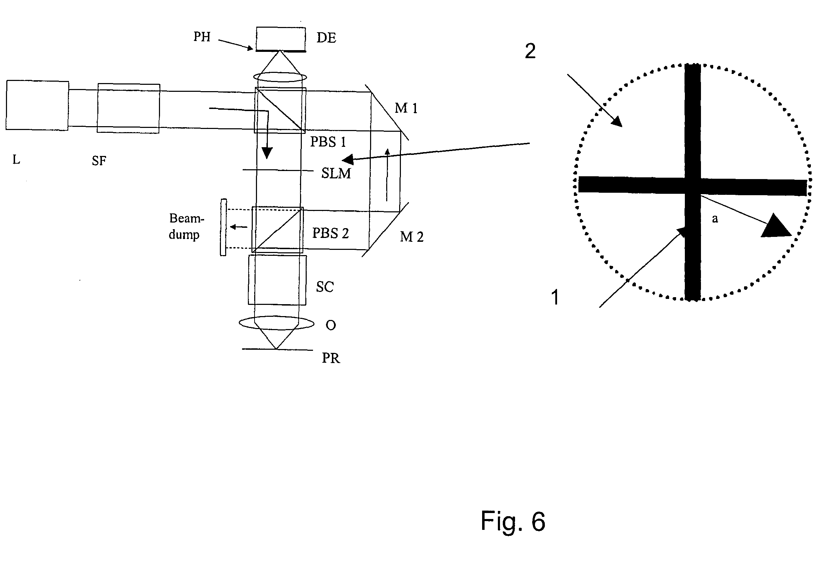

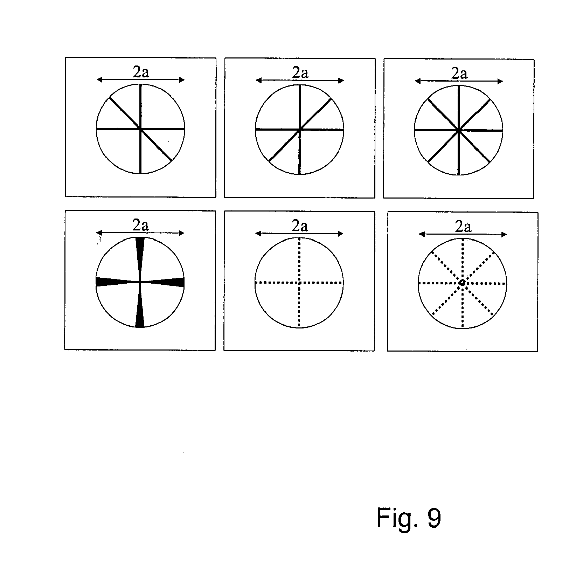

Z.B. für $s_1$=0.6 und $s_2$=0.4 folgt V=6% bei einer Ringstärke vom 0.02-fachen (1-s) des jeweiligen Ringradius. Der Vorteil der so realisierten Anordnung liegt in der genauen Justage des HFT, die bei stationärer Anordnung im Strahlengang möglich ist.
**Fall B**.: Eine andere vorteilhafte Auslegungsform des HFT besteht aus sich kreuzenden Stegen geringer Stärke (siehe Abb. 2 B). Ein besonderer Vorteil dieses HFT ist die Eignung für alle praktisch relevanten Pupillenradien, so dass die oben genannten Anpassungsprobleme entfallen. Bei Annahme eine Stegbreite b und eines vollen Pupillenradius a, ergibt sich in Fluoreszenz ein Verlust von $V = 4\cdot a\cdot b/(\pi\cdot a^2) = 4\cdot b/(\pi\cdot a)$.
Mit einer Stegbreite b=0.02a ergeben sich z.B. die Verluste zu < 3%. Bei Verwendung desselben HFT für ein Objektiv mit einer Apertur von 0.4a steigen die Verluste auf 16%. Durch eine lineare Anpassung der Stegbreite mit dem Abstand r vom Mittenpunkt, so dass b/r = const. (siehe Abb. 9) kann man konstant niedrige Verluste unabhängig vom Pupillenradius erhalten.

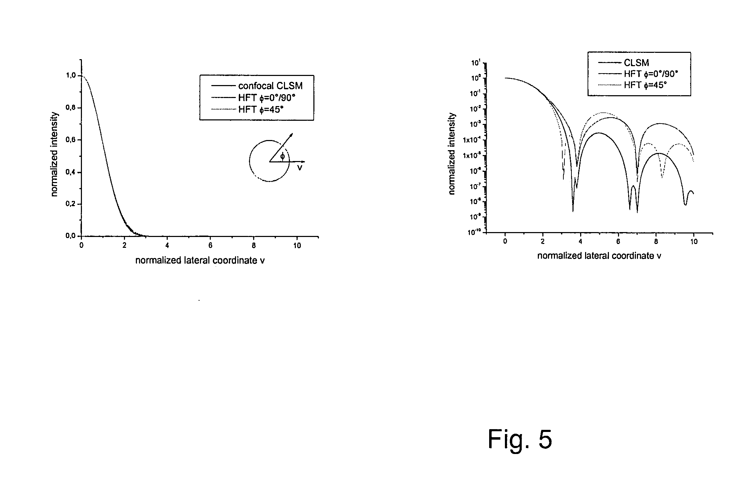

Abbildung 5 zeigt die laterale PSF für zwei verschiedene Schnitte. Die PSF ist trotz der Nicht-Rotationssymmetrie des HFT weitestgehend symmetrisch.
 gezeigt wird eine lineare (links) und logarithmische Darstellung (rechts) der lateralen PSF im konfokalen Fall nach dem Stand der Technik (CLSM) und mit dem erfindungsgemäßen HFT (Kreuz, Stege hier als unendlich dünn angenommen). Die normierte Lateralkoordinate ist $v=2\pi/\lambda$ NA r. $\lambda_{exc}$=488 nm, $\lambda_{fluo}$=520 nm.
Die axiale Verteilung der PSF ist in der Nähe der optischen Achse identisch zum konfokalen Fall nach dem Stand der Technik. Nur weit weg von der Achse v>2 ergeben sich sichtbare aber geringfügige Unterschiede. Die Abbildungseigenschaften sind also in diesem Fall tatsächlich dem des CLSM praktisch identisch.
Eine weitere Ausführungsform ergibt sich aus der Verwendung eines frei programmierbaren HFT, wie sie z.B. mit einem Spatial Light Modulator (SLM) realisiert werden kann. Eine mögliche Ausführungsform ist in Abb. 6 gezeigt. Zusätzlich zur freien Programmierung des HFT hat eine solche Anordnung den Vorteil verringerter Verluste, da nur für eine Polarisationsrichtung der Fluoreszenzstrahlung die oben beschriebenen Verluste von $1-\varepsilon^2$ auftreten. Die Gesamt-verluste reduzieren sich damit auf die Hälfte.
Licht der Lichtquelle (L) gelangt über die Mittel der Strahlformung (SF) auf einen ersten Polarisationsstrahlteiler PBS 1 und wird an diesem aufgrund der entsprechend gewählten Polarisation der Lichtquelle (beispielsweise linear) in Richtung Probe PR reflektiert. Auf dem Weg zur Probe durchtritt es einen SLM. Dieser befindet sich in oder in der Nähe einer Pupille des Mikroskops. Der SLM kann so angesteuert werden, dass die Pixel im schwarzen Bereich (1) siehe Vergrößerung SLM die Polarisation der Anregung drehen. Dadurch gelangt das Anregungslicht aus diesen Bereichen durch den zweiten Polarisationsstrahlteiler PBS 2 hindurch. Die restlichen Pixel (Bereich 2) führen keine Polarisationsänderung ein. Dadurch werden diese Anteile des Anregungslichtes Richtung Lichtfalle (beamdump) ausgespiegelt. Anstatt einer Lichtfalle kann auch ein Detektor zur Überwachung der Anregungslichtleistung angeordnet werden.

Ist die Polarisation der Lichtquelle nicht so eingestellt, dass sie komplett an PBS 1 reflektiert wird, dann gelangen diese Lichtanteile über die Spiegel M1 / M2 und durch PBS 2 ebenfalls auf den Lichtfalle.

Das in der Probe erzeugte Fluoreszenzlicht wird an PBS 2 in zwei senkrecht zueinander stehende Polarisationsanteile aufgespaltet. Der eine Anteil wird an PBS 2 reflektiert und gelangt über M2 / M1 und Reflexion an PBS 1 auf den Detektor. Der durch PBS 2 hindurch tretende Anteil gelangt über den SLM (Bereich 2) auf den PBS 1 und wird an diesem mit dem reflektierten Anteil vereinigt und gelangt ebenfalls auf den Detektor. Verloren geht lediglich der Anteil des Fluoreszenzlichtes welches auf den Bereich (1) fällt.

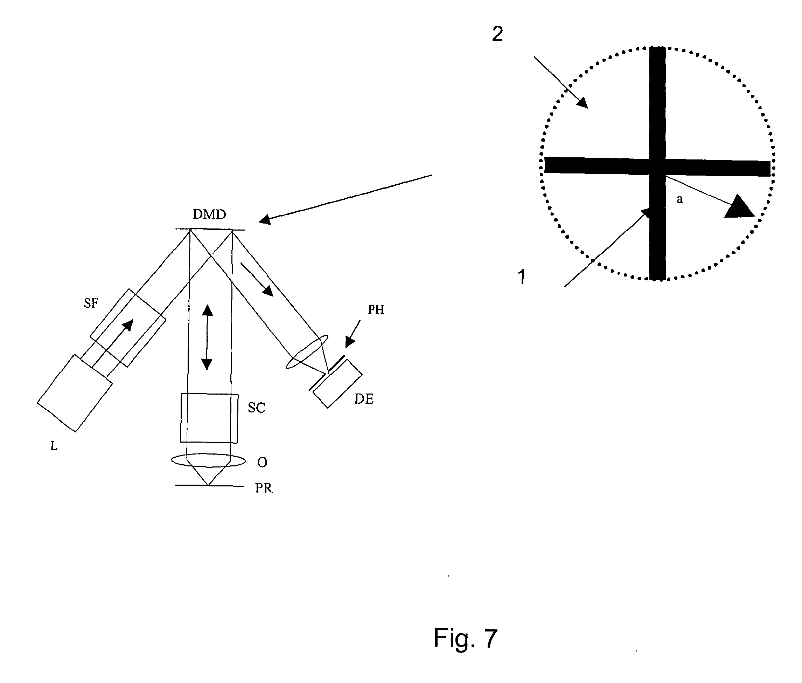

Abb. 7 zeigt eine erfindungsgemäße Anordnung, die ein Mikrospiegelarray DMD als HFT einsetzt. Licht der Lichtquelle L gelangt durch den Strahlformer SF auf den DMD, der in einer oder in der Nähe einer Pupille des Mikroskops angeordnet ist. Ein DMD besteht aus in einer Matrix angeordneten Mikrospiegeln (Pixeln), die einzeln zwischen mindestens zwei Endlagen geschaltet werden können. Die Spiegel (Pixel) des DMD sind im schwarzen Bereich (1) so geschaltet, dass die Anregung Richtung Probe PR reflektiert wird. Das Detektionslicht, das auf die restlichen Pixel (Bereich 2) fällt, gelangt Richtung Detektion. Verloren geht der Anteil des Fluoreszenzlichtes welches auf den Bereich (1) fällt.

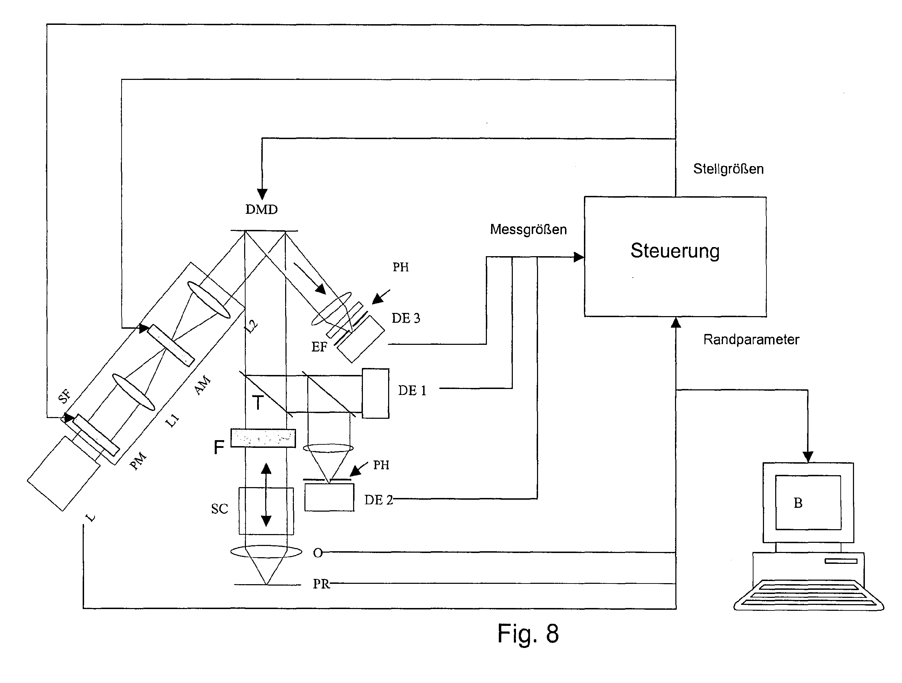

Mit Hilfe der Anordnungen aus Abb. 6 und 7 können verschiedenste Beleuchtungsmuster in der Pupille des Mikroskops zur Strahltrennung realisiert werden. Die Beleuchtungsmuster SF bzw. die Muster zur Strahlteilung am HFT können auch automatisch mit einem Regelkreis erzeugt werden - siehe Abb. 8.

Als automatische Regelungsparameter dienen hierbei die folgenden teilweise voneinander abhängigen Messgrößen:

1.) Die Konfokalität des Mikroskops, die beispielsweise durch die Messung des konfokalen Signals an DE3 erfolgen kann. Als Proben kommen hierbei entweder Testproben (wie fluoreszierende Beads oder dünne Fluoreszenzschichten) oder die zu untersuchende Probe an sich zum Einsatz. Der Einsatz von Testproben ist dann sinnvoll, wenn die eigentlich zu untersuchende Probe der Lichtdosis während der Regelung nicht ausgesetzt werden kann. Die Regelung wird so gesteuert, dass möglichst ein hohes Signal an DE 3 gemessen wird.

2.) Die Effizienz im Anregungsstrahlengang kann mit einem Weitfelddetektor an DE1 gemessen werden. Hierbei sollte möglichst ein großes Signal anliegen.

3.) Das STREHL-Verhältnis der Anregung wird mit einem konfokalen Detektor DE 2 gemessen. Das Signal sollte hierbei möglichst groß sein.

4.) Aus der Stellung der Spiegel des DMD bzw. der Pixel auf dem SLM kann die Fläche / Effizienz der Strahlteilung bestimmt werden (Verhältnis der Bereiche 1 zu 2 in Abb. 2). Die Effizienz der Strahlteilung sollte möglichst groß sein, d.h. Bereich 1 möglichst klein und Bereich 2 möglichst groß.

Es können auch entsprechende Einzelgrößen optimiert werden. Beispielsweise kann durch Optimierung der Messgröße 1) sowohl Effizienz als auch Auflösung maximiert werden. In einer weiteren Variante kann durch die Optimierung des Verhältnisses aus 1) und 2) die Auflösung und Effizienz gegeneinander in der Regelung gewichtet werden.

Der Teiler T wird hierzu optional in den Strahlengang eingeschwenkt, so dass ein Teil des Anregungslichtes (z.B. 5 %) auf DE1 und DE 2 ausgespiegelt wird. Auf Detektor DE1 wird das Licht an sich gemessen, auf DE2 ein anregungsseitiges Punktbild und auf dem eigentlichen Detektor DE3 über den DMD ein detektionsseitiges Punktbild. Zusätzlich kann die Messung 1.) mit einem Fluoreszenz erzeugenden Medium (F) erfolgen. Hierzu wird dies in den Strahlengang zwischen dem HFT und dem Scanner SC eingeschwenkt. Zum Einsatz kommen hierbei z.B. planparallele Fluoreszenzküvetten (Farbstoff vorzugsweise angepasst an den in der Probe verwendeten Farbstoff) oder planparallele fluoreszierende Gläser (beispielsweise Erbium dotierte Gläser). Vorzugsweise ist F so gestaltet, dass kein Anregungslicht in Richtung Probe gelangt.

Nach der Optimierung des Mikroskops, d.h. zur eigentlichen Messung der Probe werden der Teiler T und die Probe F wieder ausgeschwenkt.

Als Stellgrößen der Regelung dienen der HFT (bestehend aus einem DMD, SLM oder verschiedenen Spiegelmasken entsprechend den Abb. 2 / 6 / 7) und der Strahlformer SF. Am Strahlformer werden die Phase und Amplitude an PM und AM gestellt. Am HFT werden die Muster der Bereiche 1 bzw. 2 variiert.

Als Randparameter dienen hierbei Eingangsgrößen, wie die Art der Probe PR, das Objektiv O, die Lichtquelle und die vom Nutzer vorgegebene Betriebsart B (z.B. geringe oder hohe Tiefenschärfe, hohe Effizienz in der Anregung, hohe Effizienz in der Detektion). Vorzugsweise lösen diese Randparameter automatisch eine entsprechende Optimierung der Messgrößen aus.

Überraschend lässt sich die Einstellung der Geometrie mit einem Regelkreis des erfindungsgemäßen Teilers auch auf Anordnungen gemäß DE10257237 übertragen. Weitere ähnliche Anordnungen des HFT, die auf Modifikationen der vorgenannten Anordnungen bestehen können realisiert werden. Das betrifft insbesondere neben ringförmigen Anordnungen den Einsatz weitere Stege (Fall A.), z.B. unter 45 Grad zu den vorhandenen Stegen im Fall A., die Verwendung ungleichdicker Stege (z.B. sich zum Rand verdickender Stege im Fall A.) teilweise unterbrochener Stege (A. und B.)

sowie Kombinationen dieser Fälle.

Einige mögliche Beispiele sind in Abb. 9 angegeben. Die äußere Umrandung der Pupille ist dabei als symbolische Markierung zu verstehen. Im Sinne der Kombination der HFT-Varianten der Fälle A. und B. könnte dies aber auch ein ringförmige, reflektierende Zone bedeuten. Durch die Hinzunahme weiterer Stege ergibt sich eine symmetrischere Punktbildfunktion im Anregungsstrahlengang (Abb. obere Bildreihe). Dies kann für die Realisierung eines möglichst kleinen Fokusvolumens sinnvoll sein. Durch die Variation der Stegbreite (Abb. unten links) kann die Teilungseffizienz unabhängig von der Pupillengröße des Objektivs konstant gehalten werden. Durch eine Unterbrechung der Stege (Abb. unten Mitte / rechts) erhöht sich die Effizienz der Strahlteilung, ohne dass sich die Auflösung verschlechtert.

Die Stege können sich sternförmig kreuzen, mit gerader oder ungerader Steganzahl, es können auch Stege spinnenförmig angeordnet sein, mit einem gemeinsamen Mittelpunkt in der optischen Achse oder außerhalb der optischen Achse. Solche Steganordnungen können mit Ringanordnungen kombiniert sein, statt der Ringe können auch spiralförmige Strukturen vorgesehen sein oder mehrere exzentrisch angeordnete kleine Ringe oder ein - oder mehrere Dreiecke oder andere geometrische Figuren, aber auch weitere beliebige Amplituden- oder Phasenmuster sind möglich und einstellbar, wobei eine Optimierung über eine Regelung wie oben beschrieben ablaufen kann.

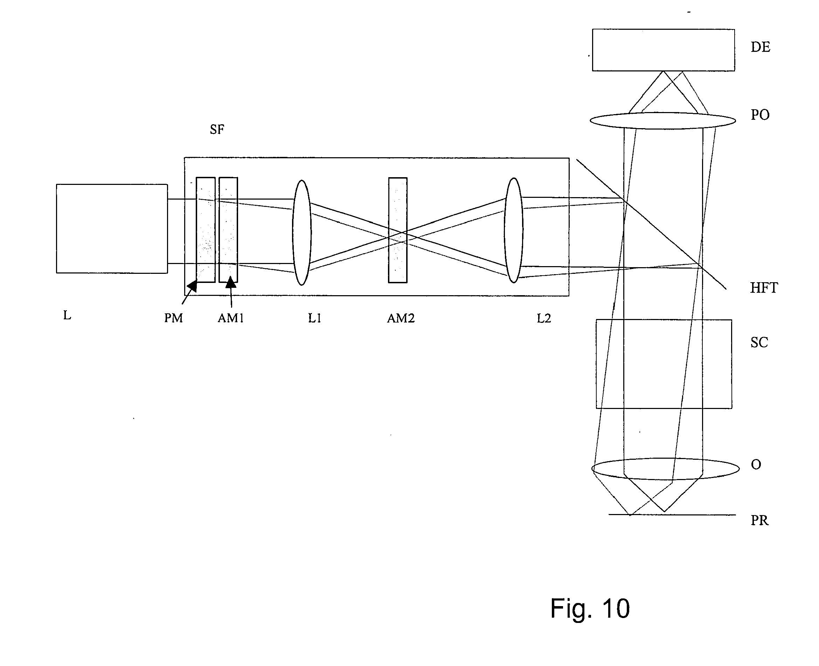

Bei einem Nipkow oder Multipunkt scannenden Mikroskopsystem wird erfindungsgemäß der dichrotische Hauptfarbteiler durch den gemusterten Strahlteiler ersetzt und in einer oder in der Nähe einer Pupille angeordnet. Abb. 10 zeigt beispielhaft die erfindungsgemäßen Anordnungen für einen Multipunkt scannendes Mikroskop. Dies zeichnet sich dadurch aus, dass mehrere Probenpunkte gleichzeitig beleuchtet und / oder detektiert werden. Die Punktmuster können beispielsweise mit der Phasenmaske PM in Kombination mit den Amplitudenmasken AM1 und AM2 oder mit anderen Verfahren nach dem Stand der Technik (z.B. Mikrolinsenarrays oder speziellen Strahlteileranordnungen (La-Vision Biotec)) erzeugt werden. Die Anregungsteilstrahlen gelangen unter verschiedenen Winkeln auf gemeinsame Regionen auf dem achromatischen Teiler HFT (z.B. Bereich 1) und werden dort in Richtung Probe reflektiert. Das Probenlicht der verschiedenen Beleuchtungspunkte gelangt auf gemeinsame Regionen (Bereich 2) auf dem achromatischen Teiler und wird in Richtung Matrixdetektor DE geleitet. Detektorelemente von DE sind so angeordnet, dass sie zu dem Beleuchtungsmuster in der Probe korrespondieren.

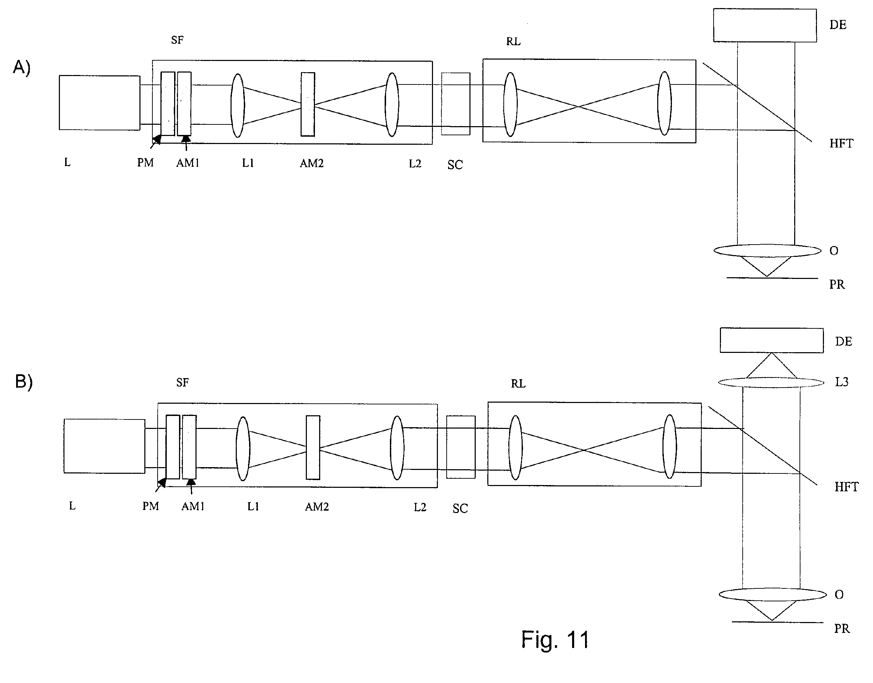

Abb. 11 zeigt erfindungsgemäße Anordnungen für eine nondescannte Detektion, wie sie beispielsweise in einem Multiphotonen-Mikroskop eingesetzt werden. Im Gegensatz zu den zuvor beschriebenen Anordnungen befinden sich die Scanner SC in einer Mikroskoppupille zwischen Lichtquelle L und achromatischen Teiler HFT. Die Wirkung und Funktion des Strahlformers ist analog zu den zuvor beschriebenen Anordnungen. Das Detektionslicht gelangt direkt (ohne descanning) auf einen Detektor DE. Mit Hilfe der Relayoptik RL findet eine Abbildung der Scannerpupille in die Pupille des HFT statt. RL kann entfallen, wenn der Scanner direkt vor dem HFT räumlich angeordnet werden kann. Zusätzlich kann der HFT auch als Scanner ausgebildet sein, so dass dann SC und HFT miteinander verschmelzen. Bei einer Multiphotonenmikroskopie sollte der Detektor vorzugsweise in einer Mikroskoppupille (Abb. 11a) angeordnet werden. Zusätzlich kann der Detektor als Matrixdetektor auch in einem Zwischenbild (erzeugt durch L3) stehen (Abb. 11 b), so dass er ortsaufgelöst die Probensignale detektieren kann.

Literatur:

[1] C. J. R. Sheppard: The use of lenses with annular aperture in scanning optical microscopy, Optik 48 (1977) 329-334.
[2] C. J. R. Sheppard and A. Choudhury: Annular pupils, radial polarization, and superresolution, Appl.Opt. 43 (2004) 4322-4327.
[3] T. Wilson and S.J. Hewlett: Superresolution in Confocal Microscopy, Op.Lett. 16(1991) 1062-1064.
[4] M. Stalder, M. Schadt: Linearly polarized light with axial symmetry generated by liquid-crystal polarization converters, Opt.Lett. 21 (1996) 1948-1950
[5] Siehe z.B. Katalog Nr. 17, Thorlabs Inc. 2005, 639.

**Patentansprüche**

1. Punktscannendes Laser- Scanning-Mikroskop mit einem in oder in der Nähe einer Pupillenebene des Strahlenganges zwischen Probe und Detektion angeordneten Element zur Trennung von Beleuchtungs- und Detektionslicht, das einen reflektierenden oder transmittierenden ersten Bereich zur Übertragung des Beleuchtungslichtes und im wesentlichen außerhalb des ersten Bereiches einen transmittierenden oder reflektierenden zweiten Bereich zur Übertragung des Probenlichtes aufweist.

2. Punktscannendes Laser- Scanning-Mikroskop mit einem in oder in der Nähe einer Pupillenebene des Strahlenganges zwischen Probe und Detektion angeordneten Element zur Trennung von Beleuchtungs- und Detektionslicht, das einen reflektierenden oder transmittierenden ersten Bereich zur Übertragung des Beleuchtungslichtes und außerhalb des ersten Bereiches einen transmittierenden oder reflektierenden zweiten Bereich zur Übertragung des Probenlichtes aufweist, wobei Ansteuermittel zur Variation der Größe und/ oder Form des ersten und/ oder zweiten Bereiches vorgesehen sind.

3. Punktscannendes Laser-Scanning-Mikroskop nach einem der vorangehenden Ansprüche, wobei eine Beeinflussung von Phase und/ oder Amplitude des Beleuchtungslichtes vorgesehen ist

4. Punktscannendes Laser-Scanning-Mikroskop nach einem der vorangehenden Ansprüche, wobei ein Strahlformer zur Erzeugung von Strahlformen vorgesehen ist

5. Punktscannendes Laser-Scanning-Mikroskop nach einem der vorangehenden Ansprüche, wobei durch den Strahlformer Beleuchtungsmuster erzeugt und in die Pupillenebene abgebildet werden

6. Punktscannendes Laser-Scanning-Mikroskop nach einem der vorangehenden Ansprüche, wobei das Element zur Übertragung des Beleuchtungsmusters reflektierend ausgebildet ist und zur Übertragung des Probenlichtes außerhalb des oder der reflektierenden Bereiche transmittierend ist

7. Punktscannendes Laser-Scanning-Mikroskop nach einem der vorangehenden Ansprüche, wobei ein- oder mehrere erste oder zweite Bereiche ringförmig ausgebildet sind

8. Punktscannendes Laser-Scanning-Mikroskop nach einem der vorangehenden Ansprüche, wobei ein- oder mehrere erste oder zweite Bereiche als Stege ausgebildet sind.

9. Punktscannendes Laser-Scanning-Mikroskop nach einem der vorangehenden Ansprüche, wobei mehrere Stege mit einem gemeinsamen Kreuzungspunkt vorgesehen sind

10. Punktscannendes Laser-Scanning-Mikroskop nach einem der vorangehenden Ansprüche, wobei der Kreuzungspunkt der Stege in der optischen Achse liegt

11. Punktscannendes Laser-Scanning-Mikroskop nach einem der vorangehenden Ansprüche, wobei die Stege einen unterbrochenen Verlauf aufweisen

12. Punktscannendes Laser-Scanning-Mikroskop nach einem der vorangehenden Ansprüche, wobei das Element (HFT) als Platte ausgelegt ist und reflektierend ist.

13. Punktscannendes Laser-Scanning-Mikroskop nach einem der vorangehenden Ansprüche, wobei das Element (HFT) als SLM ausgelegt ist, der die Polarisation manipuliert.

14. Punktscannendes Laser-Scanning-Mikroskop nach einem der vorangehenden Ansprüche, wobei das Element (HFT) als DMD ausgelegt ist, das eine Strahlumlenkung vornimmt, die für Beleuchtung und Detektion unterschiedliche Winkel aufweist.

15. Verfahren zur Einstellung eines Mikroskopes, insbesondere nach einem der vorangehenden Ansprüche , mit einem in oder in der Nähe einer Pupillenebene des Strahlenganges zwischen Probe und Detektion angeordneten Element zur Trennung von Beleuchtungs- und Detektionslicht, das einen reflektierenden oder transmittierenden ersten Bereich zur Übertragung des Beleuchtungslichtes und außerhalb des ersten Bereiches einen transmittierenden oder reflektierenden zweiten Bereich zur Übertragung des Probenlichtes aufweist, wobei Ansteuermittel zur Variation der Größe und/ oder Form des ersten und/ oder zweiten Bereiches vorgesehen sind und die Ansteuerung über einen Regelkreis erfolgt.

16. Verfahren nach Anspruch 15, in einem Weitfeldmikroskop

17. Verfahren nach Anspruch 15, in einem Mikroskop mit linienförmiger Beleuchtungsverteilung

18. Verfahren nach Anspruch 15, in einem punktscannenden Mikroskop

**19.** Verfahren nach Anspruch 15, in einem Mikroskop mit mehreren Punktlichtquellen

**20.** Verfahren einem der Ansprüche 15-19, wobei als Regel- oder Messgröße
Intensität und / oder Wellenlänge des Beleuchtungslichtes und/ oder
Intensität und/ oder Wellenlänge des Probenlichtes und/ oder
Intensität und/ oder Wellenlänge einer Testprobe und/ oder
das Strehl-Verhältnis des Anregungslichtes verwendet wird.

**21.** Punktscannendes Laser-Scanning-Mikroskop nach einem der vorangehenden Ansprüche, mit einem Nipkowscanner oder einem Multipunktscanner

**22.** Punktscannes Laser-Scanning-Mikroskop nach einem der vorangehenden Ansprüche, mit Multiphotonenanregung und insbesondere nicht- descannter Detektion.

**State of the art**

Fig. 1

EP 1 698 927 A1

Fig. 2

Fig. 3

Fig. 4

Fig. 5

Fig. 6

Fig. 7

Fig. 8

Fig. 9

EP 1 698 927 A1

Fig. 10

19

Fig. 11

EP 1 698 927 A1

**Europäisches Patentamt**

**EUROPÄISCHER RECHERCHENBERICHT**

Nummer der Anmeldung

EP 06 00 3658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | EP 0 468 817 A (ISIS INNOVATION LIMITED) 29. Januar 1992 (1992-01-29)<br>* das ganze Dokument *<br>----- | 1,3,8,<br>12,21<br>4,5,7<br>2,15 | INV.<br>G02B21/00 |
| X | US 2003/142292 A1 (WOLLESCHENSKY RALF ET AL) 31. Juli 2003 (2003-07-31)<br>* Absatz [0010] - Absatz [0028]; Abbildungen 2,3b *<br>----- | 1,6,22 | |
| Y | DE 34 09 657 A1 (FA. CARL ZEISS) 19. September 1985 (1985-09-19)<br>* Seite 7; Abbildungen 1,2 *<br>----- | 4,5 | |
| Y | US 2003/048530 A1 (SANDER ULRICH) 13. März 2003 (2003-03-13)<br>* Absatz [0033] - Absatz [0036]; Abbildung 2a *<br>----- | 7 | |

RECHERCHIERTE SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| Berlin | 12. Juni 2006 | Andreassen, J |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 3658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 0468817 | A | 29-01-1992 | JP | 5149724 A | 15-06-1993 |
| | | | US | 5262646 A | 16-11-1993 |
| US 2003142292 | A1 | 31-07-2003 | KEINE | | |
| DE 3409657 | A1 | 19-09-1985 | KEINE | | |
| US 2003048530 | A1 | 13-03-2003 | DE | 10144062 A1 | 27-03-2003 |
| | | | EP | 1293818 A2 | 19-03-2003 |
| | | | JP | 2003149559 A | 21-05-2003 |

EPO FORM P0461

Für nähere Einzelheiten zu diesem Anhang : siehe Amtsblatt des Europäischen Patentamts, Nr.12/82